# EUROPÄISCHE PATENTANMELDUNG

(11) **EP 2 599 823 A1**
(43) Veröffentlichungstag der Anmeldung: **05.06.2013**
(21) Anmeldenummer: 11009577.5
(22) Anmeldetag: 03.12.2011
(51) Int. Cl.: C08K 3/22, C08L 3/02, C09J 11/04, D21H 17/28

(54) **Boraxfreie Stärkeleimzusammensetzungen**

(71) Anmelder: BK Giulini GmbH, 67065 Ludwigshafen (DE)
(72) Erfinder: Neumann, Michael, Dr., 68239 Mannheim (DE)
(74) Vertreter: Reitstötter - Kinzebach

(57) **Zusammenfassung**

Die vorliegende Erfindung betrifft boraxfreie Stärkeleimzusammensetzungen, welche anstelle der Verwendung von Borax für die Herstellung des Stärkeleimes Natriumaluminate vorschlägt.

Diese Stärkeleime als Klebstoffe spielen eine große Rolle in vielen industriellen Anwendungen, insbesondere in der Verpackungsindustrie. Stärke und Dextrin werden dort für die Herstellung von Packpapieren und Wellpappe für deren Verklebung verwendet.

## Beschreibung

Stärke- und dextrinhaltige Klebstoffe spielen eine große Rolle in vielen industriellen Anwendungen, insbesondere in der Verpackungsindustrie. Stärke und Dextrin werden dort für die Herstellung von Packpapieren und Wellpappe für deren Verklebung verwendet. Aber auch andere poröse Substrate werden mit diesen Klebstoffen erfolgreich verklebt.

Stärke und Dextrin sind recht günstige Rohstoffe, leicht verfügbar und werden häufig als wässerige Dispersion eingesetzt. Beide können in Form von speziellen Formulierungen sowohl kalt als auch warm eingesetzt werden. Stärke und Dextrine werden als Pulver dabei in Wasser gelöst und bilden eine relativ viskose Paste. Sie härten unter Wasserabgabe aus.

Obwohl Stärke und Dextrin schon seit sehr langem als Klebstoffe in Einsatz waren, gibt es eine Reihe von Gründen, warum diese natürlichen Klebstoffe nicht zu 100 % durch synthetische Produkte ersetzt werden können:
✔ Sie sind sehr gut verfügbar
✔ Sie sind kostengünstig
✔ Sie habe eine gleichbleibende Qualität
✔ Sie verkleben gut mit cellulosehaltigen und mit anderen porösen Substraten
✔ Sie sind in Ölen und Fetten unlöslich
✔ Sie sind nicht toxisch und biologisch leicht abbaubar
✔ Sie sind wärmebeständig

Die folgende Tabelle zeigt die Eigenschaften einiger wichtigen Stärkesorten:

| | Mais | Weizen | Reis | Tapioka | Kartoffel | Sago |
|---|---|---|---|---|---|---|
| Herkunft | Korn | Korn | Korn | Wurzel | Wurzel | Korn |
| Korndurchmesser[µ] | 5-26 | 3-35 | 3-8 | 5-25 | 15-100 | 1ß-70 |
| Gelierungstemperatur [°C] | 62-72 | 58-64 | 68-78 | 43-70 | 50-68 | 60-67 |
| Amylosegehalt der Stärke [%] ca. | 28 | 25 | 19 | 20 | 25 | 26 |
| Amylopektingehalt der Stärke [%] ca. | 70 | 75 | 80 | 80 | 75 | 74 |

Die Anteile der Stärkearten Amylose und Amylopektin variieren je nach Art und Sorte der Stärkepflanze. Da für die industrielle Verwertung vor allem Amylopektin benötigt wird, werden Stärkepflanzen mit möglichst hohem Amylopektingehalt bevorzugt. So befindet sich in der EU derzeit die gentechnisch veränderte Stärke-Kartoffelsorte Amflora im Zulassungsverfahren, deren Stärke fast ausschließlich aus Amylopektin besteht. Andere Gerstensorten, deren Stärke zu 95 % aus Amylopektin besteht, beruhen auf konventionellen Züchtungsmethoden.

Beide Produkte Stärke und Dextrin sind sog. Kohlehydrat-Polymere oder genauer ist die Stärke ein natürliches Polysaccharid. Nur wenige Pflanzen enthalten genügend Stärke in ihren Blättern, Körnern oder Wurzeln, weshalb auch nur solche Pflanzen geeignet sind Stärke daraus zu gewinnen.

Stärke enthält zwei Hauptbestandteile, Amylose und Amylopektin. Amylose besitzt lange Ketten, hingegen Amylopektin eine verzweigte, vernetzte Struktur aufweist.

Diese Zusammensetzung und damit die Struktur variiert von Pflanze zu Pflanze. Eine wichtige Eigenschaft ist jedoch der Amylosegehalt, denn je höher der Anteil an Amylose desto wertvoller ist die Pflanze zur Gewinnung von Stärke geeignet.

Amylopektin ist in kaltem Wasser löslich und kann in dieser löslichen Form eingesetzt werden, Amylose dagegen ist in Wasser unlöslich. Es wird durch Kochen in heißem Wasser unter Zusatz von starkem Alkali, meist NaOH oder bei 150 bis 160 °C unter Druck aufgelöst. In der aufgelösten Form bildet Amylose eine Dispersion und feste Gele bei Konzentrationen höher als 2 %. Amylose kann nicht wirklich zu 100 % in Wasser aufgelöst werden und mit der Zeit bilden sich in solchen Dispersionen sogar kristalline Aggregate durch H-Brücken- ein Prozess, den man auch Retrogradation nennt. Dieser Prozess ist verantwortlich für die recht schwankende Viskosität von stärkehaltigen Klebern.

Die Herstellung von stärkehaltigen Klebern für die Wellpappenindustrie geschieht im Stand der Technik seit ca. 1930 schon nach dem Stein-Hall Prozess.

Stärke basierende Klebstoffe /Stärkeleime/ sind in der Herstellung von Wellpappe erforderlich. Wellpappe ist eine geklebte Leichtbau-Konstruktion aus Papier. Neben dem Papier ist daher der Stärkeleim der wichtigste Bestandteil bei der Erzeugung von Wellpappe. Klebstoff und Verklebung beeinflussen die Qualität der Wellpappe erheblich. Der Stärkeleim hat die Aufgabe, die glatten Bahnen mit den Wellenbahnen fest zu verbinden. Die Verbindung ist umso besser, je tiefer der Stärkeleim in die Poren des Papiers eindringt. Das Produkt "Wellpappe" wird in einem Verfahren hergestellt, in dem zunächst ein Papierbogen auf erwärmten Walzen gewellt wird. Anschließend wird ein solcher Bogen durch das Aufbringen eines Stärkeleimes auf die Spitzen der Wellen auf einer Seite angebracht. Diese ist dann sog. "einseitige" Pappe, es gibt aber auch "doppelseitige" Pappen. Bei der Herstellung der Wellpappe ist es unumgänglich, dass der Stärkeleim eine schnelle Verbindung zwischen den Papieroberflächen bildet. Es ist deshalb sehr wichtig, dass der dabei verwendete Stärkeleim eine solche Viskosität aufweist, was einerseits die Auftragung bzw. das Aufbringen des Klebstoffes ermöglicht, andererseits aber die Verklebung schnell genug vonstatten geht. Um die Güte der Verklebung festzustellen, wird z.B. die Reißprobe eingesetzt: Hierzu wird bei einem Stück Wellpappe die glatte Bahn von der Wellenbahn abgerissen. Je mehr Faserrückstände an den vormaligen Klebestellen zurückbleiben, desto besser war die Verklebung. Eine sehr gute Verklebung ist daran zu erkennen, dass sich die beiden Papierbahnen nur mit Faserabriss wieder trennen lassen.

Die schnelle Verkleisterung und Verklebung wird einerseits durch die hohe Applikationstemperatur und andererseits durch den Einschluss von Alkali, NaOH und durch Borverbindungen, wie Borsäure oder Borax in der Klebstoffzusammensetzung unterstützt. Borax, das chemisch Dinatriumtetraborat, Na₂B₄O₇ ist, dient während der Herstellung und Verarbeitung zur Steuerung der Stabilität, Rheologie und Oberflächenbenetzbarkeit des Stärkeklebers. Die Mengen an Borax variieren in Abhängigkeit der Anwendungen und der Stärkesorte von ca. 1,5 bis zu 20% atro bezogen auf den Stärkeeinsatz. In neuster Zeit begrenzen die Klebstoffproduzenten und -verarbeiter den Einsatz auf ca. 7% Borax.

Sobald Borax der Mischung aus Stärke und Alkali unter Rühren und Erwärmung zugegeben wird, steigt die Viskosität und sie bleibt über lange Zeit stabil. Die Stärke stammt aus Weizen, Mais, Kartoffel, Tapioka oder Erbsen, die natürlich, chemisch oder enzymatisch oder physikalisch nach den allgemeinen Verfahren modifiziert sind. Es eignen sich auch gängige Gelbdextrine, die bei der normalen Herstellung stärkehaltigen Klebstoffe zum Einsatz kommen ebenso wie teils vorverkleisterte und teils gequollene, die bei den üblichen Klebverfahren (Stein-Hall u.a.) eingesetzt werden.

Dinatriumtetraborat in Wasser und alkalischem Milieu reagiert mit Stärke in folgenden Schritten unter Bildung eines wasserlöslichen Natrium-Stärkeborats:
1. Na₂B₄O₇ + 7H₂O -> 2Na⁺ + 2OH⁻ + 4B(OH)₃
2. Na⁺ + OH⁻ + B(OH)₃ -> Na⁺ + B(OH)₄⁻
3. Na⁺ + B(OH)₄⁻ + Stärke -OH -> Na⁺ + Stärke-O-B(OH)₃⁻ + H₂O Weitere mögliche Vernetzung:
4. Na⁺ + Stärke-O-B(OH)₃⁻ + Stärke'-OH -> Na⁺ + (Stärke-O-B(OH)₂O-Stärke')⁻ + H₂O

Borax ist aufgrund seiner toxischen Einstufung "Reproduktionstoxizität (FD) 18" mittlerweile ein umstrittener Rohstoff, den die Wellpappenindustrie gerne ersetzen möchte. Borax wird seit Dezember 2010 auf der Liste der European Chemical Agency (ECHA) der EU für chemische Stoffe geführt

In der US 6,056,816 wurde vorgeschlagen ein weiteres Additiv zum Stärkeleim hinzu zufügen, nämlich ein Alkalisilikat. Diese Zusammensetzung enthält typischerweise 12 bis 35 Gew.-% Stärke, 1,5 bis 12 Gew.-% lösliche Alkalisilikate, 0,25 bis 2,5 Gew.-% Natriumhydroxid und bis zu 2 Gew.-% Borax oder Borsäure, der Rest der Formulierung ist Wasser, das von 55 bis 70 Gew.-% enthalten sein kann.

Die technischen Vorteile dieser Zusammensetzung sollen eine höhere Viskosität, eine höhere Wärmestabilität und ein höherer Feststoffgehalt von bis zu 45 Gew.-% der fertigen Zusammensetzung sein, im Gegensatz zu 15 bis 35 Gew.-% Feststoffgehalt nach dem Stand der Technik, siehe auch Spalte 4, ab Zeilen 25. folgende.

Obwohl derartige Stärkeleimformulierungen schon recht gut für den schnellen Prozess der Wellpappenherstellung geeignet waren, gab es dennoch weitere Verbesserungen, z.B. durch Zugabe von Füllstoffen, wie Calciumcarbonat, welche den Feststoffgehalt ebenfalls erhöht haben. Dies wird z.B. in der EP 1 101 809 B1 beschrieben.

In der EP 2 363 440 A1 wurde der Zusatz von einem Homopolymer einer a, ßungesättigter Acrylsäure gemäß der allg. Formel: CH₂=CR-COOH, worin R ein Substituent sein kann, das ausgewählt ist aus H, monovalentem Alkyl, Aryl, oder Aralkyl Radikalen oder monovalentem zyklischen Alkyl Radikalen, Haloalkylen, Cyanoalkylen, mit 1 bis 9 C-Atomen. Gemäß Anspruch 16 dort besteht eine typische Zusammensetzung aus 20 bis 80 Gewichtsteilen (GT) Stärke, 5 bis 50 GT NaOH, 200 bis 250 GT Stärkepulver, 1 bis 25 GT Borax und 0,01 bis 5 GT Polyacrylsäure oder Methacrylsäure Additiv. Auch diese Erfindung hatte zum Ziel die Viskosität dem Herstellungsprozess anzupassen, siehe auch Seite 2, Zeilen 35, [0008].

Die oben genannten Zusammensetzungen enthielten trotz der zusätzlichen Additive weiterhin Borax bis zu 2 Gew.-% oder 25 GT, je nachdem worauf sich die Menge an Borax bezog. Gemäß Römpp-Online Chemielexikon, ist Borax vor allem in Verpackungen, die mit Lebensmitteln oder generell in menschlichen Gebrauch eingesetzt werden, möglichst zu vermeiden. In Römpp-Online, 2011, steht weiterhin, dass "Borax-Rauch die Nasen- und Rachenschleimhäute reizt. Die Einnahme größerer Mengen ruft Magenschmerzen, Erbrechen und Durchfall, sowie Kreislaufschwäche bis zum Schock hervor. Bei Haut- und Augenkontakt können Entzündungen hervorgerufen werden. Die intakte Haut wird von Borax jedoch nicht angegriffen; TRGS 900 (2009): Arbeitsplatzkonzentration 0,5 mg/m³." Ebenso muss in allen Wellpappenwerken sichergestellt werden, dass die maximalen Arbeitsplatzkonzentrationen nicht überschritten werden. Viele Wellpappenhersteller stellen daher auf "flüssiges Borax" um.

Gerade der Kontakt mit der Haut ist der häufigste Kontakt bei Verpackungen. Ein "Borax-Ersatz" in der Verpackung - oder Wellpappenindustrie ist daher dringend geboten.

Der Einsatz von Borax ist außerdem durch eine geringere Wasserlöslichkeit beschränkt, es löst sich nur zu 3-5%, sowie durch die Reizung der Schleimhäute, wenn es in Pulverform eingesetzt wird.

Als Ersatz für den Einsatz in Stärkekleberformulierungen wurde unter anderem "Freebor" vorgeschlagen. Offenbar ist dieses Produkt ein Gel und wirkt bei der Zugabe zum Stärkeleim stabilisierend auf die Viskosität. Leider ist die chemische Struktur bzw. Formel dieser Verbindung nicht offenbart. Es existiert ein Sicherheitsdatenblatt ohne jegliche Angabe zur chemischen Natur. Es wird angenommen, dass es sich um ein Acrylatgel handelt.

Es bestand also ein dringendes Bedürfnis, in den Stärkeleimzusammensetzungen, welche in der Herstellung von Papier bzw. Wellpappe verwendet werden, Borax vollständig zu ersetzen und dabei trotzdem alle wichtigen Eigenschaften, wie Viskosität, Feststoffgehalt, pH- Wert, etc. zu erhalten.

Es wurde nun überraschenderweise gefunden, dass der Einsatz von Natriumaluminat, sowohl in der flüssigen, als auch der festen Form, den Erhalt dieser Eigenschaften garantiert und darüber hinaus die Zusammensetzungen vollkommen boraxfrei macht und dadurch in Bezug auf die Toxizität und Arbeitshygiene einen sehr großen Vorteil bietet.

Natriumaluminat kann mit der allg. Formel: Na[Al(OH)₄] oder auch Na₂Al₂O₄ beschrieben werden, weil das Produkt mehr als den stöchiometrisch erforderlichen Anteil an Na₂O enthält. Deshalb wird auch zur Charakterisierung das Na₂O/Al₂O₃ Verhältnis angegeben. Natriumaluminat wird großtechnisch durch den sog. Bayer Aufschluß von Bauxit oder auch durch Rückgewinnung von in industriellen Prozessen entstehenden Aluminatabfalllaugen, wie das Eloxalverfahren des Aluminiums gewonnen. Generell werden Natriumaluminate bei der Umsetzung von überschüssiger Natronlauge mit Aluminiumsalzen hergestellt.

Es wird gemäß Römpp-Online, 2011, eingesetzt: "Natriummetaaluminat dient zur Herstellung von Seifen, Papieren, Milchglas, Lackfarben, in der Emailindustrie, als

Beize in der Alizarin-Färberei, zur Wasserenthärtung, Frischwasseraufbereitung, Abwasserklärung durch Flockung besonders in Kombination mit anderen Flockungsmitteln, als Betondichtungsmittel und Schnellhärter beim Talsperren-, Tunnel- und Brückenbau und vermag die Umesterung von Pflanzenöl zu Biodiesel zu katalysieren.

Die gute Löslichkeit in Wasser von Natriumaluminat erlaubt seine Verwendung in der flüssigen, wässrigen Form, was enorm vorteilhaft ist in Bezug auf die Arbeitshygiene, denn so kann ätzende Staubbelastung vermieden werden. Die wässrige Lösung hat einen pH-Wert von 11 bis 12.

Natriumaluminat dissoziiert in Wasser zu Na⁺ und [Al(OH)₄]⁻ Ionen, welches dann mit den Stärkemolekülen im alkalischen Milieu folgende Reaktionen eingehen. Nach Bildung eines wasserlöslichen Natrium-Stärkealuminats erfolgt in einem zweiten Kondensationsschritt die Vernetzung mit einem zweiten Stärkemolekül:
1. Na⁺ + Al(OH)₄⁻ + Stärke-OH -> Na⁺ + Stärke-O-Al(OH)₃⁻ + H₂O
2. Na⁺ + Stärke-O-Al(OH)₃⁻ + Stärke'-OH -> Na⁺ + (Stärke-O-Al(OH)₂-O-Stärke')⁻ + H₂O

Ansäuern führt zur Hydrolyse unter Al₂O₃ -Bildung.

Sobald Natriumaluminat der in Wasser gelösten Stärke unter Rühren und Erwärmung zugegeben wird, steigt die Viskosität und sie bleibt über lange Zeit stabil. Die Stärke stammt aus Weizen, Mais, Kartoffel, Tapioka oder Erbsen, die natürlich, chemisch oder enzymatisch oder physikalisch nach den allgemeinen Verfahren modifiziert sind. Es eignen sich daher ebenfalls auch gängige Gelbdextrine, die bei der normalen Herstellung stärkehaltigen Klebstoffe zum Einsatz kommen ebenso wie teils vorverkleisterte und teils gequollene, die bei den üblichen technischen Klebverfahren eingesetzt werden.

Wenn man diese Reaktionen mit der von Borax und Stärke, wie oben bereits dargestellt, vergleicht, erkennt man den ähnlichen Verlauf. Diese Reaktion bewirkt, dass die Stärke unter Vernetzung in ein wasserlösliches Aluminatsalz übergeführt wird. Es wird dadurch möglich, die Einstellung der Rheologie und die optimale Verarbeitbarkeit des Stärkeleims in der Wellpappenherstellung zu gewährleisten. Das war schon deshalb sehr überraschend, weil bereits NaOH, also auch ein sehr stark alkalisches Additiv, zum Einsatz kam. Es ist aber auch bekannt, dass NaOH nicht in der Lage ist, eine Vernetzung der Stärke zu bewirken. Es reguliert lediglich den pH-Wert und dient als alkalisches Aufschlussmittel für die Stärke unter Änderung des Gelierpunktes. Ebenso ist das alkalische Natriumsilikat mit NaOH nicht geeignet die Vernetzung und damit die Stabilisierung der Viskosität ohne Boraxzusatz zu bewirken, siehe US 6,056,816.

Natriumaluminat kann nun erfindungsgemäß in wässriger Form, aber auch in fester Form der Stärke-Wasser Dispersion beim thermischen Aufschluß zugesetzt werden.

Erfindungsgemäß wird festes Natriumaluminat mit einem Al₂O₃ Gehalt von 53-55 % und mit einer üblichen Korngröße von 0,1 - 0,063 mm und 1,0 - 0,09 mm eingesetzt oder als wässrige Natriumaluminatlösung mit 10-45 % Feststoffanteil und 5-25 % Al₂O₃-Gehalt als Komponente eingesetzt.

Erfindungsgemäß wird Natriumaluminat in Granulat oder Pulverform in Mengen von 1 bis 35 Gew.-%, bevorzugt, 2 bis zu 10%, 25-70°C warmen Wasser, in dem das Stärke gelöst vorliegt, mit einem Stärke-(oder Dextrin)Anteil bis 45 % atro zugegeben bzw. dispergiert. Bei der einsetzenden Vernetzungsreaktion beobachtet man in Abhängigkeit der Mischungen einen Anstieg der Viskosität. Die fertigen, klebenden, niedrig- bis hochviskose Mischungen bleiben längere Zeit stabil und können als Stärkeklebstoffe für die Wellpappen - und Papierproduktion eingesetzt werden.

Natriumaluminat dient während der Herstellung und Verarbeitung zur Steuerung der Stabilität, Rheologie und Oberflächenbenetzung des Stärkeklebers auf den zu verklebenden Flächen. Die Menge an benötigtem Natriumaluminat beträgt erfindungsgemäß von 1 bis zu 35% atro bezogen auf den Stärke-und/oder Dextrineinsatz. Für die Herstellung von Mischungen mit hohem Feststoffanteil und um Mischung mit einer niedrigeren Viskosität zu erhalten, können weiterhin Polyphosphate als Verflüssiger und/oder auch geeignete Füllstoffsysteme, z.B. CaCO₃ in die Mischung eingearbeitet werden.

Die Verwendung bzw. die Möglichkeit, Natriumaluminat, sowohl in fester, als auch in flüssiger Form einzusetzen, bietet dem Anwender große Freiheit bei der individuellen Ausgestaltung der eigenen Stärkeleimrezeptur unter Berücksichtigung der zu erzielenden Klebwerte. Im Vergleich ist Borax dagegen nur begrenzt wasserlöslich, nur zu 3 bis 5% in heißem Wasser und muss daher immer in fester Form eingearbeitet werden, was zu den bekannten Problemen in der Arbeitshygiene und Arbeitssicherheit führt.

Die folgenden Beispiele 1 bis 3 beschreiben die Herstellung eines Stärkeleimes für die papierverarbeitende Industrie, ohne die Erfindung einzuschränken:
Beispiel 1: **Stärkeleim** wird hergestellt aus:
   300 Teile Wasser
   20 Teile native Weizenstärke
   8 Teile Natriumaluminat fest mit 53/55 Gew.-% Al₂O₃, 25 min. Rühren bei 48°C, 1100 U/min
   600 Teile Wasser
   250 Teile native Weizenstärke
   6 Teile Natriumaluminat 53/55 Gew.-% Al₂O₃, 20 min Rühren bei 30°C , 1100 U/min Der pH-Wert betrug 12,5.

Endviskosität des Stärkeleimes: 1170 mPas (Brookfield, LV Spindelsatz, Spindel 3, 30 upm)

### Beispiel 2: Stärkeleim wird hergestellt aus:

500 Teile Wasser
400 Teile Gelbdextrin
25 Teile Natriumaluminat 53/55 Gew.-% Al₂O₃, 30 min. Dispergieren bei 48°C, 1100 U/min
Der pH-Wert betrug 12,5.

Endviskosität des Stärkeleimes: 900 mPas (Brookfield, LV Spindelsatz, Spindel 3 30 upm)

### Beispiel 3: Stärkeleim wird hergestellt aus:

500 Teile Wasser
80 Teile Natriumaluminatlösung mit 19% Al₂O₃ 30 min.
400 Teile Gelbdextrin, Dispergieren bei 48°C, 1100 U/min
Der pH-Wert betrug 12,5.

Endviskosität des Stärkeleimes: 950 mPas (Brookfield, LV Spindelsatz, Spindel 3, 30 upm)

## Patentansprüche

1. Verwendung von festem Natriumaluminat mit einem Na₂O /Al₂O₃ Verhältnis von 1,0 bis 1,5, und einem Al₂O₃-Gehalt von 53 bis 55 %, mit einer Korngrößenverteilung von 0,1 bis 1 mm, in Mengen von 1 bis 35 Gew.-%, bevorzugt 2 bis 10 Gew.-% bezogen auf den Stärkeanteil, als Komponente in boraxfreien Stärkekleimen in der Papier-und Wellpappenherstellung.

2. Verwendung von wässrigen Natriumaluminatlösungen mit 10-45 Gew.-% Feststoffanteil bezogen auf den Stärkeanteil und einem Na₂O /Al₂O₃ Verhältnis 1,0 - 1,5 und 5- 25 Gew.-% Al₂O₃-Gehalt als Komponente in boraxfreien Stärkekleimen zur Papier- und Wellpappenherstellung.
